Europäisches Patentamt

European Patent Office

Office européen des brevets

(19)

(11) Veröffentlichungsnummer : **0 093 979 B1**

(12) **EUROPÄISCHE PATENTSCHRIFT**

(45) Veröffentlichungstag der Patentschrift :
07.05.86

(21) Anmeldenummer : 83104216.3

(22) Anmeldetag : 29.04.83

(51) Int. Cl.⁴ : **B 60 R 22/32**

(54) Schloss für Sicherheitsgurte von Luft-, Wasser- und Landverkehrsmitteln.

(30) Priorität : 07.05.82 DE 3217082
17.09.82 DE 3234486

(43) Veröffentlichungstag der Anmeldung :
16.11.83 Patentblatt 83/46

(45) Bekanntmachung des Hinweises auf die Patenterteilung : 07.05.86 Patentblatt 86/19

(84) Benannte Vertragsstaaten :
FR GB IT SE

(56) Entgegenhaltungen :
CH-A- 618 094
DE-A- 2 136 406
DE-A- 2 363 973
DE-A- 2 701 186
FR-A- 2 369 947
FR-A- 2 446 203
US-A- 3 311 188

(73) Patentinhaber : Hugo Kern und Liebers GmbH & Co.
Platinen- und Federnfabrik
Industriestrasse 35
D-7230 Schramberg 11 (DE)

(72) Erfinder : Otzen, Uwe, Dr., Dipl.-Ing.
Eisenbahnstreasse 16
D-7210 Rottweil (DE)
Erfinder : Wild, Karl
Mariazeller Strasse 5
D-7230 Schramberg (DE)

(74) Vertreter : Patentanwälte Dipl.-Ing. Klaus Westphal
Dr. rer. nat. Bernd Mussgnug Dr. rer.nat. Otto Buchner
Waldstrasse 33
D-7730 VS-Villingen (DE)

## Beschreibung

Die Erfindung betrifft ein Schloß für Sicherheitsgurte von Luft-, Wasser- und Landverkehrsmitteln mit einer auslösbaren Verriegelung der Schloßzunge mit einem Auslöseglied, das mittels einer Drucktaste gegen die Kraft einer Rückstellfeder manuell schiebend bewegbar ist und am Ende seines Bewegungsweges die Verriegelung auslöst, und mit einer automatischen Auslöseeinrichtung, die durch ein von einem Sensor erzeugtes elektrisches Signal ansteuerbar ist und die einen elektromechanischen Antrieb aufweist, der an dem Auslöseglied entgegengesetzt zur Drucktaste ziehend augreift, wobei die automatische Auslösung auf das durch den Sensor erzeugte elektrische Signal nach einer vorgegebenen Verzögerungszeit erfolgt und diese Verzögerungszeit bei mehreren innerhalb der Verzögerungszeit aufeinanderfolgenden elektrischen Signalen auf jedes Signal jeweils neu zu laufen beginnt.

Ein Schloß dieser Gattung ist aus der CH-A-618 094 bekannt. Bei diesem bekannten Schloß wird die eingerastete Schloßzunge durch das schwenkbar gelagerte Auslöseglied verriegelt. Das Auslöseglied kann einerseits manuell mittels der Drucktaste aus der Verriegelungsstellung gedrückt werden. Andererseits kann das Auslöseglied durch einen unter Federspannung stehenden Auslösehebel aus der Verriegelungsstellung geschwenkt werden. Der Auslösehebel ist normalerweise arretiert und kann zur automatischen Öffnung des Schlosses mittels eines Tauchankermagneten freigegeben werden, wenn dieser durch ein elektrisches Signal erregt wird. Das elektrische Signal wird im Falle eines unfallbedingten Stoßes durch einen Trägheitssensor erzeugt. Das vom Trägheitssensor erzeugte elektrische Signal wird elektronisch um eine vorgegebene Zeit von beispielsweise etwa 8 Sekunden verzögert, damit bei einem Unfall das Schloß erst öffnet, wenn das Unfallgeschehen abgelaufen ist. Da bei einem Unfall häufig mehrere Aufprallstöße aufeinanderfolgen, muß sichergestellt sein, daß die Person durch den Sicherheitsgurt auch noch bei den nachfolgenden Aufprallstößen gehalten wird. Zu diesem Zweck wird bei mehreren innerhalb der Verzögerungszeit aufeinanderfolgenden Stößen durch das jeweilige elektrische Signal des Trägheitssensors die Verzögerungszeit neu gestartet, so daß auch nach dem letzten Stoß noch die volle Verzögerungszeit abläuft, bevor das Schloß automatisch geöffnet wird.

Bei diesem bekannten Schloß muß nach jeder automatischen Auslösung der Auslösehebel wieder manuell in seine arretierte Stellung gebracht werden. Wird das Schloß beispielsweise zur Überprüfung seiner Funktionsfähigkeit automatisch ausgelöst und beim nachfolgenden Schließen des Schlosses das manuelle Einrasten des Auslösehebels vergessen, so ist die automatische Auslösung des Schlosses nicht möglich. Die Funktionssicherheit des Schlosses ist daher nicht zwangsläufig gewährleistet.

Die automatische Auslösung mittels des Tauchankermagneten und des Auslösehebels ist konstruktiv aufwendig und macht eine besondere Konstruktion der Verriegelung und des Öffnungsmechanismus des Schlosses notwendig. Eine Verwendung der automatischen Auslösung in Verbindung mit einer bewährten und zuverlässigen Konstruktion eines manuellen auslösbaren Schlosses is nicht möglich.

Aus der US-A-3 311 188 ist ein Schloß bekannt, bei welchem zur Verriegelung der Schloßzunge ein keilförmiges Schiebeteil zwei gegeneinander verschwenkbare Hebel in Eingriff mit der Schloßzunge hält. Das Schiebeteil ist einerseits zum manuellen Öffnen des Schlosses mittels einer Drucktaste schiebend bewegbar und andererseits zum automatischen Öffnen des Schosses mittels eines an der entgegengesetzten Seite angreifenden Tauchankermagneten ziehend bewegbar. Durch die Bewegung des Schiebeteils gibt dieses die beiden Hebel frei, so daß diese mittels einer Zugfeder aus der Verriegelungsstellung geschwenkt werden.

Auch bei diesem bekannten Schloß ist die Konstruktion des Öffnungsmechanismus speziell der automatischen Auslösung angepaßt. Die automatische Auslösung kann daher nicht mit einer zuverlässigen bewährten Konstruktion eines manuell auslösbaren Öffnungsmechanismus kombiniert werden. Die Zugfeder, die die Verriegelungshebel aus der Schloßzunge herausschwenkt, muß sehr stark sein, um das Schloß auch dann öffnen zu könken, wenn das Schloß z. B. durch das Gewicht der angegurteten Person unter einer hohen Zugspannung steht. Die starke Zugfeder bewirkt wiederum eine starke Reibung zwischen dem Schiebeteil und den Verriegelungshebeln, die durch den Tauchankermagneten überwunden werden muß. Der Tauchankermagnet muß daher sehr groß und damit teuer und platzaufwendig ausgebildet sein, um ein zuverlässiges automatisches Auslösen zu gewährleisten.

Aus der DE-A-2 363 973 ist ein automatisch auslösendes Schloß für Sicherheitsgurte bekannt. Bei diesem Schloß wird ein mit dem Sicherheitsgurt verbundener Bügel durch eine Zange gehalten. Die Zange sitzt an einer Mutter, die mittels einer von einem Elektromotor angetriebenen Gewindespindel verschiebbar ist. Durch Verschieben der Mutter wird die Zange gegen einen Anschlag geschoben und durch diesen geöffnet. Das Öffnen des Schlosses erfolgt mit einer zeitlichen Verzögerung gegenüber dem das Anlaufen des Elektromotors verursachenden unfallbedingten Stoß, wobei die Verzögerungszeit durch die Dauer der Verschiebung der Mutter auf der Gewindespindel bestimmt ist.

Dieses bekannte automatisch öffnende Schloß ist eine selbständige Baueinheit, die nicht mit einem manuell betätigbaren Öffnungsmechanismus vereinigt ist. Der automatische Auslösungsvorgang wird bei einem Unfall durch den ersten Stoß ausgelöst, ein Rücksetzen der Verzögerungszeit bei mehreren aufeinanderfolgenden Stößen ist nicht möglich. Es besteht daher die Gefahr, daß das Schloß bei einem auf den ersten Stoß nachfolgenden späteren Stoß bereits geöffnet ist. Schließlich muß nach einem automatischen Auslösen z. B. zur Überprüfung der Funktionsfähigkeit der Zange durch manuelles Verdrehen der Gewindespindel wieder in ihre Schließstellung zurückbewegt werden.

Der Erfindung liegt die Aufgabe zugrunde, ein manuell und automatisch öffenbares Schloß der eingangs genannten Gattung so zu verbessern, daß es nach einem Öffnen zwangsläufig wieder in seine für ein erneutes Verriegeln einsatzbereite Stellung zurückkehrt und daß die automatische Auslösung in Verbindung mit einer bewährten zuverlässigen manuell betätigbaren Auslösung der Verriegelung verwendbar ist, ohne daß diese geändert werden muß.

Diese Aufgabe wird erfindungsgemäß dadurch gelöst, daß der elektromechanische Antrieb ein Elektrogetriebemotor mit einer Gewindespindel ist, daß das Auslöseglied gegen die Gewindespindel frei bewegbar ist, daß auf der Gewindespindel eine das Auslöseglied mitnehmende und für die schiebende Bewegung freigebende Schleppmutter sitzt, daß das Auslöseglied unter Federspannung an der Schleppmutter anliegt und daß ein bei der Auslösung der Verriegelung auf den Elektrogetriebemotor einwirkendes Schaltglied vorgesehen ist. Vorteilhafte Ausführungsformen und Weiterbildungen der Erfindung sind in den Unteransprüchen angegeben.

Bei dem erfindungsgemäßen Schloß greift der das automatische Öffnen bewirkende Elektrogetriebemotor über die Gewindespindel und die Schleppmutter ziehend an dem Auslöseglied an und bewegt dieses in derselben Bewegungsbahn wie dies bei der manuellen Betätigung schiebend erfolgt. Der Entriegelungsmechanismus und seine manuelle Auslösung durch die Drucktaste müssen daher nicht geändert werden. Die Auslösung des Entriegelungsmechanismus erfolgt in völlig gleicher Weise, wenn das Auslöseglied manuell von einer Seite durch Druck verschoben oder von der entgegengesetzten Seite mittels des Elektrogetriebemotors durch Zug verschoben wird. Der ziehende Antrieb mittels der Schleppmutter gibt das Auslöseglied für die Bewegung bei manueller Betätigung frei, so daß unabhängig von der automatischen Auslösung jederzeit auch ein manuelles Öffnen des Schlosses möglich ist.

Da der Entriegelungsmechanismus und das diesen auslösende Auslöseglied nicht geändert sind, kann die automatische Betätigung bei jedem beliebigen herkömmlichen Schloß eingesetzt werden. Insbesondere kann die automatische Auslösung in Verbindung mit manuell betätigbaren herkömmlichen Schlössern verwendet werden, deren Verriegelungs- und Entriegelungsmechanismus bereits bewährt ist und sämtlichen Sicherheitsvorschriften entspricht.

Der Elektrogetriebemotor wird durch das elektrische Signal eines Sensors, insbesondere eines Trägheitssensors in Betrieb gesetzt. Durch die Getriebeuntersetzung des Elektrogetriebemotors wird bewirkt, daß bereits ein kleiner Elektrogetriebemotor mit geringem Drehmoment, der die Bauabmessungen des Schlosses nicht wesentlich beeinträchtigt, ausreicht um eine hohe Zugkraft auf das Auslöseglied auszuüben. Diese hohe Zugkraft ist notwendig, da das Schloß u. U. auch automatisch geöffnet werden muß, wenn es unter hoher Zugbelastung steht, weil z. B. eine verletzte oder besinnungslose Person in dem Gurt hängt.

In einer ersten Ausführungsform der Erfindung kommt die Schleppmutter nur über weniger als den halben Umfang mit der Gewindespindel in Eingriff und ist von dieser abhebbar. Die Schleppmutter ist an einem Arm einer Wippe angebracht, an deren anderem Arm ein durch das elektrische Signal des Sensors erregbarer Elektromagnet angreift.

In diese Ausführungsform wird durch die Untersetzung des Elektrogetriebemotors und die Gewindesteigung der Gewindespindel erreicht, daß das Auslösen des Entriegelungsmechanismus am Ende des Verschiebungsweges des Auslösegliedes erst nach der gewünschten Verzögerungszeit erfolgt. Damit auch bei mehreren aufeinanderfolgenden Aufprallstößen die gesamte Verzögerungszeit nach dem letzten Stoß abläuft, ist die Schleppmutter von der Gewindespindel abhebbar. Durch das Abheben der Schleppmutter kommt diese außer Eingriff von der Gewindespindel, so daß das Auslöseglied durch die Rückstellfedern wieder in seine Ausgangsstellung gebracht werden kann. Das Öffnen der Schleppmutter wird durch das elektrische Signal des Trägheitssensors ausgelöst, so daß bei jedem Stoßimpuls durch einen Aufprall während des Unfallablaufs die Schleppmutter geöffnet wird und die Zugbewegung des Auslöseglieds durch den Elektrogetriebemotor wieder aus der Ausgangsstellung des Auslöseglieds über dessen vollen Bewegungsweg und somit über die volle Verzögerungszeit beginnt. Die Schleppmutter wird durch die Wippe von der Gewindespindel abgehoben, wenn der die Wippe betätigende Elektromagnet durch das elektrische Signal des Trägheitssensors erregt wird.

Vorzugsweise ist am Ende des Bewegungsweges des Auslöseglieds als Schaltglied ein Endschalter vorgesehen, der durch das Auslöseglied betätigt wird. Durch diesen Endschalter kann einerseits die Stromzuführung zu dem Elektrogetriebemotor abgeschaltet werden, wen das Schloß automatisch ausgelöst ist. Vorteilhafterweise wird durch diesen Endschalter auch ein den Elektromagneten erregendes Signal erzeugt, so daß nach dem Auslösen des Schlosses auch die Schleppmutter außer Eingriff gebracht wird und das Auslöseglied zwangsläufig wieder in seine Ausgangsstellung für ein erneutes Verriegeln gelangt.

In einer anderen Ausführungsform der Erfindung ist die Drehrichtung des Elektrogetriebemotors umpolbar und die Umpolung ist jeweils an den Enden des Bewegungsweges der Schleppmutter auslösbar, um das Schloß nach einer automatischen Auslösung zwangsläufig wieder in seine einsatzbereite Ausgangsstellung zurückzuführen.

Die Schleppmutter sitzt unverlierbar auf der Gewindespindel. Beim automatischen Auslösen der Verriegelung liegt die Schleppmutter unter Druck an dem mit dem Auslöseglied verbundenen Querbügel an. Da keine Relativbewegung zwischen der Schleppmutter und dem Querbügel auftritt, müssen im Gegensatz zur ersten Ausführung keine Reibungskräfte überwunden werden, wenn das Schloß unter hoher Zugbelastung steht. Der Elektrogetriebemotor muß daher nur die Verriegelungskräfte überwinden.

Die Verzögerungszeit zwischen der Erzeugung des Signals durch den Trägheitssensor und dem Auslösen der Verriegelung durch die automatische Auslöseeinrichtung wird durch ein elektronisches Zeitglied bewirkt. Der Elektrogetriebemotor wird erst nach Ablauf der Verzögerungszeit dieses Zeitglieds in Gang gesetzt und bewirkt erst dann die Verschiebung des Auslösegliedes mittels der Schleppmutter. Treten infolge von Mehrfachstößen im Verlauf eines Unfalls aufeinanderfolgend mehrere Signale des Trägheitssonsors auf, so wird das elektronische Zeitglied rückgestellt und die vorgegebene Verzögerungszeit beginnt neu zu laufen, bevor der Elektrogetriebemotor in Gang gesetzt ist. Es kann somit keine Teilentriegelung der Schloßzunge auftreten, die die Haltekraft des Schlosses bei nachfolgenden Stößen verringert. Das Schloß bleibt bis zum Ablauf der vollen vorgegebenen Verzögerungszeit unverändert in seinem vollständig verriegelten Ausgangszustand mit maximaler Haltekraft.

Das die Verzögerungszeit und die Rückstellbarkeit bewirkende elektronische Zeitglied kann außerhalb des Gehäuses des Schlosses untergebracht sein, so daß es die Bauabmessungen des Schlosses nicht beeinflußt.

Sobald bei einer automatischen Auslösung die Schleppmutter das Auslöseglied bis zum Ende seines Bewegungsweges gezogen hat, so daß die Verriegelung ausgelöst ist, wird die Drehrichtung des Elektrogetriebemotors umgepolt, so daß die Schleppmutter sofort wieder in ihre Ausgangsstellung zurückbewegt wird und das Schloß für eine erneute Verriegelung funktionsbereit ist. Die Drucktaste und das Auslöseglied werden dabei durch die Rückstellfedern in ihre Ausgangsstellung zurückbewegt. Das Schloß ist somit jederzeit zwangsläufig funktionsfähig, ohne daß dazu zusätzliche Maßnahmen durch den Benutzer notwendig sind. Es besteht keine Möglichkeit, daß die Verriegelung nicht oder nur unvollständig eintritt, weil der Benutzer irgendwelche dazu notwendigen Maßnahmen aus Unkenntnis oder Vergeßlichkeit nicht durchführt oder nur unzureichend durchführt.

Das Umpolen des Elektrogetriebemotors wird vorzugsweise durch als Endschalter ausgebildete Schaltglieder bewirkt, die an den Enden der Bewegungsbahn der Schleppmutter angeordnet sind. Die Endschalter sind vorzugsweise berührungslose Näherungsschalter, da diese keine Kraft benötigen und geringe Abmessungen aufweisen. Ebenso können auch mechanische Mikroschalter verwendet werden.

Es ist auch möglich, die Endstellungen der Schleppmutter auf elektronische Weise festzustellen. Hierzu kann ein das Umpolen der Drehrichtung bewirkendes elektrisches Signal aus dem Anstieg der Stromaufnahme des Elektrogetriebemotors abgeleitet werden, wenn die Schleppmutter an den Enden ihres Bewegungsweges durch einen Anschlag festgehalten wird.

Ebenso ist es möglich, die Zahl der Umdrehungen des Elektrogetriebemotors bzw. der Gewindespindel oder die Laufdauer des Elektrogetriebemotors elektronisch zu zählen und die Drehrichtung des Elektrogetriebemotors nach einer vorgegebenen Zahl von Umdrehungen bzw. einer vorgegebenen Laufdauer umzupolen.

Die Funktionen des rückstellbaren elektronischen Zeitgliedes werden vorzugsweise von einem Mikroprozessor übernommen. Der Mikroprozessor ermöglicht bei kleinstem Platz- und Energiebedarf eine große Vielseitigkeit. Es können neben einem Trägheitssensor, der auf die Beschleunigung bei unfallbedingtem Aufprall anspricht, weitere Sensoren vorgesehen sein, die auf Hitze bzw. Feuer und Wasser ansprechen. Die elektrischen Signale der Sensoren für Feuer und Wasser führen dabei über den Mikroprozessor zur unmittelbaren Ansteuerung der automatischen Auslöseeinrichtung ohne zeitliche Verzögerung. Auch das Umpolen der Drehrichtung des Elektrogetriebemotors und ggf. das Zählen der Umdrehungen des Elektrogetriebemotors bzw. der Spindel oder der Laufdauer des Elektrogetriebemotors kann von dem Mikroprozessor übernommen werden.

In manchen Fällen ist es erwünscht, daß das Schloß des Sicherheitsgurtes nach einem Unfall nicht automatisch öffnet, wenn eine bewußtlose Person in dem Gurt hängt, um nicht noch weitere Verletzungen dieser Person beim Öffnen des Schlosses zu verursachen. Um diese Forderung zu erfüllen, kann an dem Schloß ein Dehnungsmeßstreifen vorgesehen sein, der auf die Zugbelastung des Schlosses anspricht, die von dem Körpergewicht der in dem Gurt hängenden Person erzeugt wird. Überschreitet diese auf den Dehnungsmeßstreifen wirkende Zugbelastung einen vorgegebenen Wert, so wird die Stromzuführung zu dem Elektrogetriebemotor unterbrochen, so daß der automatische Auslösevorgang nicht weiterläuft. Erst wenn die Zugbelastung nachläßt, wird dem Elektrogetriebemotor wieder Strom zugeführt, so daß der automatische Auslösevorgang ablaufen kann. In der ersten Ausführungsform kann zusätzlich der auf die Wippe der Schleppmutter wirkende Elektromagnet erregt werden, solange die Zugbelastung den vorgegebenen Wert überschreitet. Die Schleppmutter wird daher außer Eingriff gehalten, bis die Zugbelastung wieder nachläßt. Das Auslöseglied wird dabei wieder in seine Ausgangsstellung zurückgeführt, so daß nach dem Wegfall der Zugbelastung erneut die gesamte Verzögerungszeit abläuft.

Zur Stromversorgung des Elektrogetriebemotors dient in der Regel das elektrische Bordnetz. Da bei einem Unfall in Ausnahmefällen auch das Bordnetz z. B. durch Zerstörung der Batterie oder durch Kurzschluß vollständig ausfallen kann, kann zur Sicherheit ein Speicherakkumulator oder ein Kondensator in die Stromversorgung des Elektrogetriebemotors und des Sensors eingeschaltet sein. Für den kleinen Gleichstromgetriebemotor genügt aus Kosten- und insbesondere aus Platzgründen eine Speicherakkumulatorzelle geringer Spannung. Diese niedrige Spannung genügt auch bei einem totalen Ausfall des Bordnetzes zum Betreiben des Gleichstromgetriebemotors. Der Elektrogetriebemotor läuft bei dieser niedrigen Spannung zwar langsamer, dies bedeutet jedoch nur eine unwesentliche Verzögerung beim Entriegeln des Schlosses.

Die automatische Betätigung des Auslösegliedes gemäß der Erfindung kann einem herkömmlichen manuell auslösbaren Schloß angefügt werden, ohne dessen Konstruktion zu ändern. Die erfindungsgemäße automatische Betätigung benötigt nur einen geringen konstruktiven Aufwand und beansprucht nur wenig Platz. Insbesondere bei der zweiten Ausführungsform müssten in dem Gehäuse des Schlosses lediglich der Elektrogetriebemotor mit der Gewindespindel sowie gegebenenfalls die Endschalter untergebracht werden. Diese wenigen Bauteile vergrößern aufgrund ihrer geringen Abmessungen das Gehäuse des Schlosses gegenüber einem herkömmlichen Schloß nur unwesentlich.

Im folgenden wird die Erfindung anhand von in der Zeichnung dargestellten Ausführungsbeispielen näher erläutert. Es zeigen

Figur 1 einen vertikalen Längsschnitt durch ein Schloß gemäß einer ersten Ausführungsform,

Figur 2 eine Draufsicht auf dieses Schloß,

Figur 3 einen vertikalen Längsschnitt durch ein Schloß gemäß einer zweiten Ausführungsform und

Figur 4 eine Draufsicht auf dieses Schloß der zweiten Ausführungsform.

In der Zeichnung sind nur die zur Erläuterung der Erfindung wesentlichen Teile dargestellt. Insbesondere ist der das elektrische Signal erzeugende Sensor nicht gezeigt. Wie vorstehend ausgeführt wurde, kann dieser Sensor beliebig ausgebildet sein, wesentlich ist nur seine Eigenschaft, ein elektrisches Signal zu erzeugen bzw. eine Schaltungsfunktion zur Schließung von Stromkreisen zu übernehmen. Die verwendbaren Sensoren gehören zum an sich bekannten Stand der Technik.

Weiter sind die Ausgestaltung der Schloßzunge, ihre Verriegelung in dem Schloß, der Entriegelungsmechanismus und seine Auslösung durch das Auslöseglied nicht dargestellt. Wie vorstehend ausgeführt wurde, können diese Teile in beliebiger herkömmlicher Weise ausgestaltet sein.

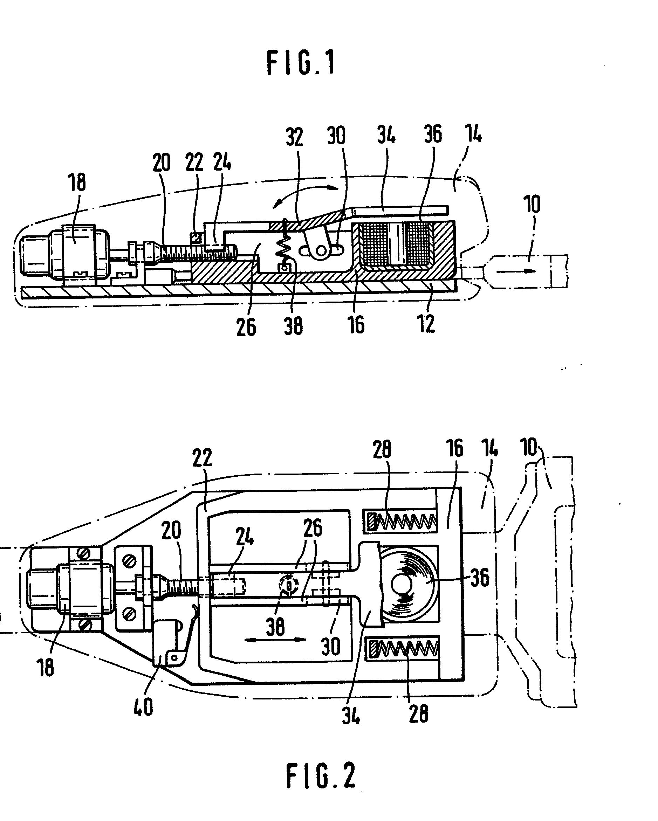

In dem in den Fig. 1 und 2 dargestellten ersten Ausführungsbeispiel rastet die mit dem Gurt fest verbundene Schloßzunge 10 in dem nur schematisch durch seine Grundplatine 12 und sein Gehäuse 14 angedeuteten Schloß in nicht dargestellter Weise ein. Die Einrastung der Schloßzunge 10 wird durch einen nicht dargestellten Entriegelungsmechanismus entriegelt, so daß die Schloßzunge ausgeworfen werden kann.

Ein Auslöseglied 16 ist auf der Platine 12 verschiebbar gelagert. Das Auslöseglied 16 ist aus seiner in der Zeichnung dargestellten rechten Endstellung nach links in eine Endstellung verschiebbar, in welcher es den Entriegelungsmechanismus zur Freigabe der Schloßzunge 10 auslöst. Zur manuellen Öffnung des Schlosses wird das Auslöseglied 16 durch Niederdrücken einer nicht dargestellten Drucktaste in an sich bekannter Weise verschoben. Die Drucktaste wirkt direkt oder über einen Hebel schiebend auf das schloßzungenseitige Ende des Auslösegliedes 16.

Auf das der Schloßzunge 10 entgegengesetzte Ende der Platine 12 ist ein kleiner Gleichstrom-Elektrogetriebemotor 18 montiert. Der Elektrogetriebemotor 18 treibt über ein Untersetzungsgetriebe eine Gewindespindel 20 an, sobald seine Stromversorgung in der oben beschriebenen Weise durch das elektrische Signal des Sensors eingeschaltet wird. Die Gewindespindel 20 durchsetzt frei einen vertikalen Rand 22 des Auslösegliedes 16 an dessen dem Elektrogetriebemotor 18 zugesandten Ende. Innerhalb des Auslösegliedes 16 sitzt eine Schleppmutter 24 auf der Gewindespindel 20. Die Schleppmutter 24 erstreckt sich nur über weniger als den halben Umfang der Gewindespindel 20, so daß sie von dieser nach oben abgehoben werden kann und außer Eingriff kommt. Die Schleppmutter 24 ist zwischen zwei in Verschiebungsrichtung des Auslösegliedes verlaufenden Führungen 26 des Auslösegliedes 16 gleitend geführt. Rückstellfedern 28, die zwischen dem Auslöseglied 16 und dem Schloßgehäuse angeordnet sind, halten das Auslöseglied 16 mit seinem Rand 22 an der Schleppmutter 24 anliegend. Bei manueller Betätigung wird das Auslöseglied 16 gegen die Kraft der Rückstellfedern 28 in der Zeichnung nach links verschoben. Dabei wird der vertikale Rand 22 des Auslösegliedes 16 von der Schleppmutter 24 abgehoben, die sich gleitend in den Führungen 26 bewegt. Die manuelle Betätigung des Auslöseglieds 16 und damit die manuelle Auslösung des Entriegelungsmechanismus ist somit nicht behindert. In Langlöchern 30 der Führungen 26 ist verschiebbar die Schwenkachse einer zweiarmigen Wippe 32 gelagert. An dem einen Arm der Wippe ist die Schleppmutter 24 angebracht, während der andere Arm der Wippe 32 als Ankerplatte 34 ausgebildet ist, die sich einem in dem Auslöseglied 16 sitzenden Elektromagneten 36 gegenüber befindet. Durch eine Feder 38 wird die Wippe so vorbelastet, daß die Schleppmutter 24 in Eingriff mit der Gewindespindel 20 gehalten wird.

Wird der Elektromagnet 36 erregt, so zieht er die Ankerplatte 34 an und die Schleppmutter 24 wird gegen die Kraft der Zugfeder 38 von der Gewindespindel 20 abgehoben. Aufgrund der Lagerung der Schwenkachse der Wippe 32 in den Langlöchern 30 verhindert die Wippe 32 die manuelle Verschiebbarkeit des Auslösegliedes 16 nicht.

Die automatische Betätigung des Auslösegliedes arbeitet in folgender Weise :

Das elektrische Signal, das bei einem unfallbedingten Aufprall oder bei Feuer durch einen Sensor oder manuell durch eine Taste erzeugt wird, schaltet einerseits die Stromversorgung des Elektrogetriebemotors 18 ein und erregt andererseits kurzzeitig den Elektromagneten 36. Der Elektromagnet 36 zieht die Ankerplatte 34 an und bringt die Schleppmutter 24 außer Eingriff von der Gewindespindel 20. Nach diesem kurzzeitigen Abheben der Schleppmutter 24 kommt diese wieder mit der Gewindespindel 20 in Eingriff. Der Elektrogetriebemotor 18 treibt die Gewindespindel 20 an, diese zieht die Schleppmutter 24 in Richtung auf den Elektrogetriebemotor 18 zu, wobei die Schleppmutter 24 an dem vertikalen Rand 22 des Auslöseglieds 16 anliegt und dieses mitzieht.

Auf diese Weise wird das Auslöseglied 16 so weit in der Zeichnung nach links gezogen, bis es den Entriegelungsmechanismus des Schlosses auslöst. Nach dem Auslösen des Entriegelungsmechanismus betätigt das Auslöseglied 16 am Ende seines Bewegungsweges einen Endschalter 40. Durch die Betätigung des Endschalters 40 wird einerseits die Stromversorgung des Elektrogetriebemotors 18 abgeschaltet und andererseits der Elektromagnet 36 kurzzeitig erregt. Die Gewindespindel 20 wird daher stillgesetzt und der Elektromagnet 36 hebt kurzzeitig die Schleppmutter 24 von der Gewindespindel 20 ab. Die Rückstellfedern 28 können nun das Auslöseglied 16 wieder nach rechts in die in der Zeichnung dargestellte Endstellung zurückdrücken. Das Schloß ist nun wieder bereit für die Aufnahme und Verriegelung der Schloßzunge 10.

Wird während der Verzögerungsdauer von z. B. ca. acht Sekunden, die der Elektrogetriebemotor für das Zurückziehen des Auslöseglieds 16 über die gesamte Verschiebungsstrecke benötigt, ein zweites elektrisches Signal durch den Sensor erzeugt, z. B. infolge eines zweiten Aufpralls innerhalb des Unfallablaufs, so wird der Elektromagnet 36 durch dieses elektrische Signal erneut kurzzeitig erregt. Er hebt die Schleppmutter 24 von der Gewindespindel 20 ab, so daß die Rückstellfedern 28 das Auslöseglied 16 wieder in seine Ausgangsstellung drücken können. Sobald der Elektromagnet 36 die Ankerplatte wieder freigibt, kommt die Schleppmutter 24 wieder mit der Gewindespindel 20 in Eingriff und der Elektromotor 18 beginnt erneut, das Auslöseglied 16 über eine gesamte Verschiebungsstrecke zu ziehen.

Mit jedem Aufprall innerhalb eines Unfallablaufs beginnt somit die Verzögerungszeit von ca. acht Sekunden bis zum automatischen Öffnen des Schlosses erneut zu laufen.

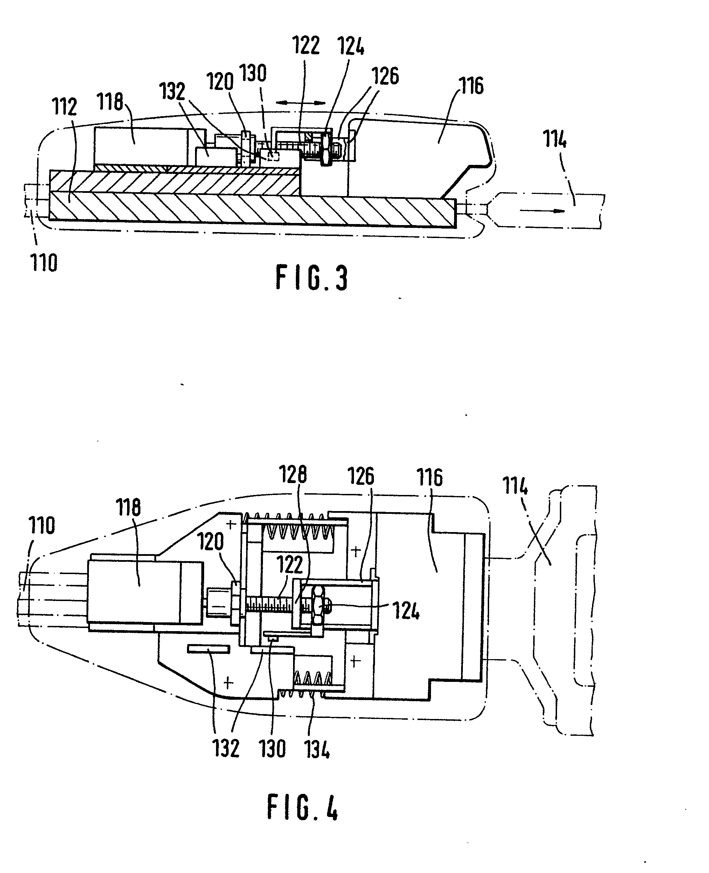

In den Fig. 3 und 4 ist ein weiteres Ausführungsbeispiel des Schlosses dargestellt.

Das Schloß weist eine z. B. mittels einer Peitsche 110 an der Karosserie eines Kraftfahrzeuges befestigte Grundplatte 112 auf. Die Grundplatte 112 trägt die Aufnahme für die an dem Sicherheitsgurt angebrachte Schloßzunge 114 und die in der Zeichnung nicht dargestellte Verriegelung für die Schloßzunge 114. Das gesamte Schloß ist von einem Gehäuse umgeben, das in der Zeichnung nur in seinem Umriß dargestellt ist. In dem Gehäuse ist eine Drucktaste 116 vorgesehen, die manuell durch Druck schiebend in Längsrichtung des Schlosses bewegbar ist. Mit der Drucktaste 116 ist ein in der Zeichnung nicht dargestelltes Auslöseglied verbunden, welches die Verriegelung der Schloßzunge auslöst, wenn die Drucktaste 116 in der Darstellung der Zeichnung nach links verschoben wird. Beim Einschieben der Schloßzunge 114 wird eine in der Zeichnung nicht dargestellte Druckfeder gespannt, die die Schloßzunge 114 in der Richtung des Pfeiles in Fig. 3 ausstößt, sobald die Verriegelung der Schloßzunge ausgelöst ist.

In diesen vorstehend genannten Merkmalen ist auch in dieser zweiten Ausführung das Schloß vollständig herkömmlicher Art. Diese Merkmale sind daher in der Zeichnung nicht im einzelnen dargestellt und auch nicht im einzelnen beschrieben. Insbesondere kann die Ausgestaltung der Verriegelung der Schloßzunge und des die Verriegelung auslösenden Auslösegliedes beliebig gewählt sein.

An dem der Drucktaste 116 entgegengesetzten Ende des Schlosses ist auf der Grundplatte 112 ein Elektrogetriebemotor 118 mit umpolbarer Drehrichtung befestigt. Der Elektrogetriebemotor 118 besteht vorzugsweise aus einem Gleichstrommotor mit aufgestecktem Untersetzungsgetriebe. Die Abtriebswelle des Elektrogetriebemotors 118, die mittels eines Lagerbockes 120 auf der Grundplatte 112 gelagert ist, treibt eine in Längsrichtung des Schlosses verlaufende Gewindespindel 122 an.

Auf der Gewindespindel 122 sitzt eine Schleppmutter 124. Die Schleppmutter 124 wird drehfest und axial verschiebbar zwischen zwei Führungen 126 gehalten, die an der rückwärtigen Stirnfläche der Drucktaste 116 befestigt und damit auch mit dem Auslöseglied fest verbunden sind. Die freien Enden der beiden Führungen 126 sind durch einen Querbügel 128 verbunden, der von der Gewindespindel 122 frei bewegbar durchsetzt wird.

An einem seitlich an der Schleppmutter 124 angebrachten Arm ist ein kleiner Magnet 130 befestigt. Der Magnet 130 wirkt auf zwei berührungslose Näherungsschalter 132 ein, die an den Enden des Bewegungsweges der Schleppmutter 124 angeordnet sind.

Die Drucktaste 116 und das mit dieser fest verbundene Auslöseglied werden durch zwei Rückstellfedern 134 in ihrer in der Zeichnung dargestellten Ausgangsstellung gehalten.

Das Schloß dieser zweiten Ausführungsform arbeitet in folgender Weise :

Zum manuellen Auslösen der Verriegelung der Schloßzunge 114 wird die Drucktaste 116 durch Druck auf ihre Stirnfläche in Richtung des in Fig. 3 eingezeichneten Doppelpfeils gegen die Kraft der Rückstellfedern 134 verschoben, bis in der linken Endstellung das Auslöseglied die Verriegelung der Schloßzunge auslöst und diese ausgeworfen wird. Der Querbügel 128 der Führungen 126 wird dabei frei über die Gewindespindel 122 geschoben und nach links von der Schleppmutter 124 wegbewegt. Wird die Drucktaste 116 wieder losgelassen, so wird sie durch die Rückstellfedern 134 wieder in ihre in der Zeichnung dargestellte Ausgangsstellung bewegt, so daß das Schloß für ein erneutes Einführen und Verriegeln der Schloßzunge 114 funktionsbereit ist.

Wird durch einen Sensor ein elektrisches Signal zur automatischen Auslösung des Schlosses erzeugt, so wird der Elektrogetriebemotor 118 in Gang gesetzt. Bei einem durch einen Feuer- oder Wassersensor erzeugten Signal wird der Elektrogetriebemotor 118 sofort in Gang gesetzt, bei einem durch einen Trägheitssensor erzeugten Signal erst nach einer vorgegebenen Verzögerungszeit nach diesem Signal bzw. nach dem letzten von mehreren aufeinanderfolgenden Signalen.

Der Elektrogetriebemotor 118 treibt die Gewindespindel 122 an, wodurch sich die drehfest und axial verschiebbar in den Führungen 126 gehaltene Schleppmutter 124 nach links bewegt. Die Schleppmutter 124 kommt dabei an dem Querbügel 128 zur Anlage und zieht über diesen und die Führungen 126 die Drucktaste nach links. Das mit der Drucktaste 116 verbundene Auslöseglied entriegelt am Ende dieses Bewegungsweges die Schloßzunge, so daß diese ausgeworfen wird.

Sobald die Schloßzunge ausgeworfen ist, gelangt am Ende des Bewegungsweges der Schleppmutter 124 der mit dieser verbundene Magnet 130 in den Bereich des in der Zeichnung linken Näherungsschalters 132 und betätigt diesen. Durch die Betätigung des linken Näherungsschalters 132 wird die Drehrichtung des Elektrogetriebemotors 118 umgepolt, so daß sich die Schleppmutter 124 wieder nach rechts bewegt. Die Drucktaste 116 folgt dieser Bewegung durch den Druck der Rückstellfedern 134, bis sie wieder ihre Ausgangsstellung erreicht hat. Sobald die Schleppmutter 124 ihre in der Zeichnung dargestellte rechte Endstellung erreicht hat, gelangt der mit der Schleppmutter 124 verbundene Magnet 130 in den Bereich des rechten Näherungsschalters 132 und betätigt diesen. Durch die Betätigung des rechten Näherungsschalters 132 wird der Elektrogetriebemotor 118 stillgesetzt und seine Drehrichtung erneut umgepolt.

Das Schloß ist damit wieder für die Aufnahme und Verriegelung der Schloßzunge sowie für eine manuelle oder automatische Auslösung einsatzbereit.

**Patentansprüche**

1. Schloß für Sicherheitsgurte von Luft- Wasser- und Landverkehrsmitteln mit einer auslösbaren Verriegelung der Schloßzunge (10, 114), mit einem Auslöseglied (16, 116), das mittels einer Drucktaste gegen die Kraft einer Rückstellfeder (28, 134) manuell schiebend bewegbar ist und am Ende seines Bewegungsweges die Verriegelung auslöst, und mit einer automatischen Auslöseeinrichtung, die durch ein von einem Sensor erzeugtes elektrisches Signal ansteuerbar ist und die einen elektromechanischen Antrieb aufweist, der an dem Auslöseglied (16, 116) entgegengesetzt zur Drucktaste ziehend angreift, wobei die automatische Auslösung auf das durch den Sensor erzeugte elektrische Signal nach einer vorgegebenen Verzögerungszeit erfolgt und diese Verzögerungszeit bei mehreren innerhalb der Verzögerungszeit aufeinanderfolgenden elektrischen Signalen auf jedes Signal jeweils neu zu laufen beginnt, dadurch gekennzeichnet, daß der elektromechanische Antrieb ein Elektrogetriebemotor (18, 118) mit einer Gewindespindel (20, 122) ist, daß das Auslöseglied (16, 116) gegen die Gewindespindel (20, 122) frei bewegbar ist, daß auf der Gewindespindel (20, 122) eine das Auslöseglied (16, 116) mitnehmende und für die schiebende Bewegung freigebende Schleppmutter (24, 124) sitzt, daß das Auslöseglied (16, 116) unter Federspannung (28, 134) an der Schleppmutter (24, 124) anliegt und daß ein bei der Auslösung der Verriegelung auf den Elektrogetriebemotor (18, 118) einwirkendes Schaltglied (40, 132) vorgesehen ist.

2. Schloß nach Anspruch 1, dadurch gekennzeichnet, daß die Schleppmutter (24) nur über weniger als den halben Umfang mit der Gewindespindel (20) in Eingriff kommt und von dieser abhebbar ist und daß die Schleppmutter (24) an einem Arm einer Wippe (32) angebracht ist, an deren anderem Arm ein durch das elektrische Signal des Sensors erregbarer Elektromagnet (36) angreift.

3. Schloß nach Anspruch 2, dadurch gekennzeichnet, daß der Elektromagnet (36) zusätzlich durch ein elektrisches Signal erregbar ist, das durch das auf den Elektrogetriebemotor (18) einwirkende Schaltglied (40) erzeugt wird.

4. Schloß nach Anspruch 1, dadurch gekennzeichnet, daß die Drehrichtung des Elektrogetriebemotors (118) umpolbar ist und daß die Umpolung jeweils an den Enden des Bewegungsweges der Schleppmutter (124) auslösbar ist, um das Schloß nach einer automatischen Auslösung zwangsläufig wieder in seine einsatzbereite Ausgangsstellung zurückzuführen.

5. Schloß nach Anspruch 4, dadurch gekennzeichnet, daß ein rückstellbares elektronisches Zeitglied vorgesehen ist, welches die Verzögerungszeit für die automatische Auslösung erzeugt.

6. Schloß nach Anspruch 4, dadurch gekennzeichnet, daß die Schleppmutter (124) drehfest und axial verschiebbar in einer mit dem Auslöseglied verbundenen Führung (126) angeordnet ist und an einem Querbügel (128) der Führung (126) ziehend anliegt.

7. Schloß nach Anspruch 6, dadurch gekennzeichnet, daß die Führung (26) an der mit dem Auslöseglied verbundenen Drucktaste (116) angebracht ist.

8. Schloß nach Anspruch 4, dadurch gekennzeichnet, daß an beiden Enden des Bewegungsweges der Schleppmutter (124) durch diese betätigbare Schaltglieder (132), z. B. berührungslose Näherungsschalter oder Mikroschalter angeordnet sind.

9. Schloß nach Anspruch 4, dadurch gekennzeichnet, daß die Enden des Bewegungsweges der Schleppmutter (124) elektronisch feststellbar sind.

10. Schloß nach Anspruch 9, dadurch gekennzeichnet, daß aus dem Anstieg der Stromaufnahme des Elektrogetriebemotors (118) an den Enden des Bewegungsweges der Schleppmutter (124) ein elektronisches Signal zum Umpolen der Drehrichtung des Elektrogetriebemotors (118) ableitbar ist.

11. Schloß nach Anspruch 9, dadurch gekennzeichnet, daß die Enden des Bewegungsweges der Schleppmutter (124) durch elektronisches Zählen der Umdrehungen des Elektrogetriebemotors (118) bzw. der Gewindespindel (122) oder der Laufdauer des Elektrogetriebemotors (118) feststellbar sind.

12. Schloß nach Anspruch 1, dadurch gekennzeichnet, daß die Stromversorgung des Elektrogetriebemotors (18, 118) und des Sensors durch das Bordnetz des Verkehrsmittels bzw. bei dessen Ausfall über einen Speicherakkumulator oder Kondensator erfolgt.

13. Schloß nach Anspruch 1, dadurch gekennzeichnet, daß ein auf eine Zugbelastung des Schlosses ansprechender Dehnungsmeßstreifen vorgesehen ist, der bei Überschreiten einer vorgegebenen Zugbelastung die Stromzufuhr zu dem Elektrogetriebemotor (18, 118) unterbricht.

14. Schloß nach Anspruch 2 und Anspruch 13, dadurch gekennzeichnet, daß bei Überschreiten einer vorgegebenen Zugbelastung des Dehnungsmeßstreifens durch diesen gesteuert der Elektromagnet (36) erregbar ist.

**Claims**

1. Lock for safety belts or air, water and land transport means, comprising a releaseable latch of the lock tongue (10, 114), including a releasing member (16, 116) which can be manually moved to slide against the force of a restoring spring (28, 134) by means of a pushbutton and at the end of its travel releases the latch, and comprising an automatic releasing device which can be actuated by an electric signal generated by a sensor and which is provided with an electro-mechanical drive which engages the releasing member (16, 116) in a pulling action opposite to the pushbutton, during which process the automatic releasing takes place after a predetermined delay time on the electric signal generated by the sensor and, if several electric signals follow each other within the delay time, this delay time in each case recommences to run on each signal, characterised in that the electro-mechanical drive is a geared electric motor (18, 118) provided with a threaded spindle (20, 122), that the releasing member (16, 116) is freely movable against the threaded spindle (20, 122), that on the threaded spindle (20, 122) a trailing nut (24, 124) is seated which carries along the releasing member (16, 116) and releases it for the sliding movement, that the releasing member (16, 116) rests against the trailing nut (24, 124) under spring tension (28, 134) and that a switching member (40, 132) is provided which acts on the geared electric motor (18, 118) when the latch is released.

2. Lock according to Claim 1, characterised in that the trailing nut (24) only engages the threaded spindle (20) over less than half the periphery and can be lifted away from it and that the trailing nut (24) is attached to one arm of a rocker (32) the other arm of which is engaged by an electromagnet (36) which can be excited by the electric signal of the sensor.

3. Lock according to Claim 2, characterised in that the electromagnet (36) can be additionally excited by an electric signal which is generated by the switching member (40) acting on the geared electric motor (18).

4. Lock according to Claim 1, characterised in that the direction of rotation of the geared electric motor (118) can be reversed in polarity and that the polarity reversal can be triggered in each case at the ends of the travel of the trailing nut (124) to force the lock to return back to its operationally ready initial position after an automatic releasing action.

5. Lock according to Claim 4, characterised in that a resettable electronic timing section is provided which generates the delay time for the automatic releasing.

6. Lock according to Claim 4, characterised in that the trailing nut (124) is arranged in a rotationally fixed and axially movable manner in a guide (126), which is connected to the releasing member, and rests in a pulling manner against a cross bar (128) of the guide (126).

7. Lock according to Claim 6, characterised in that the guide (26) is attached to the pushbutton (116) which is connected to the releasing member.

8. Lock according to Claim 4, characterised in that at both ends of the travel of the trailing nut (124), switching members (132), for example contactless proximity switches or microswitches are arranged which can be actuated by the trailing nut.

9. Lock according to Claim 4, characterised in that the ends of the travel of the trailing nut (124) can be electronically detected.

10. Lock according to Claim 9, characterised in that an electronic signal for reversing the polarity of the direction of rotation of the geared electric motor (118) can be derived from the rise in current consumption of the geared electric motor (118) at the ends of the travel of the trailing nut (124).

11. Lock according to Claim 9, characterised in that the ends of the travel of the trailing nut (124) can be detected by electronic counting of the revolutions of the geared electric motor (118) or of the threaded spindle (122) or of the duration of operation of the geared electric motor (118).

12. Lock according to Claim 1, characterised in that the geared electric motor (18, 118) and the sensor are supplied with power through the on-board system of the transport means or, if this fails, via a storage accumulator or capacitor.

13. Lock according to Claim 1, characterised in that a strain gauge is provided which responds to a tensile load on the lock and which interrupts the power supply to the geared electric motor (18, 118) if a predetermined tensile load is exceeded.

14. Lock according to Claim 2 and Claim 13, characterised in that the electromagnet (36) can be excited under control of the strain gauge if a predetermined tensile load on the strain gauge is exceeded.

**Revendications**

1. Fermoir pour ceintures de sécurité de moyens de transport aériens, aquatiques et terrestres, avec un verrouillage susceptible d'être déclenché de la languette de fermoir (10, 114), avec un organe de déclenchement (16, 116), qui est susceptible d'être déplacé manuellement en coulissant contre l'action d'un ressort de rappel (28, 134), et qui, à l'extrémité de sa course de déplacement, déclenche le verrouillage, et avec un dispositif de déclenchement automatique susceptible d'être commandé par un signal électrique engendré par un détecteur et qui comporte un entraînement électromécanique venant en prise sur l'organe de déclenchement (16, 116) à l'opposé du bouton poussoir, le déclenchement automatique s'effectuant sur le signal électrique engendré par le détecteur après un temps de retard prédéfini, et ce temps de retard, au cas où des signaux électriques se succèdent à l'intérieur du temps de retard, commençant à courir respectivement à nouveau à chaque signal, fermoir caractérisé en ce que l'entraînement électromécanique est un moto-réducteur (18, 118) avec une broche filetée (20, 121), en ce que l'organe de déclenchement (16, 116) est susceptible de se déplacer librement par rapport à la broche filetée (20, 122), un écrou d'entraînement (24, 124), entraînant l'organe de déclenchement (16, 116), étant placé sur la broche filetée (20, 122), l'organe de déclenchement (16, 116) étant appliqué sous la tension d'un ressort (28, 134) contre l'écrou d'entraînement (24, 124), tandis qu'il est prévu un organe de commutation (40, 132) agissant sur le moto-réducteur électrique (18, 118) lors du déclenchement du verrouillage.

2. Fermoir selon la revendication 1, caractérisé en ce que l'écrou d'entraînement (24) vient en prise avec la broche filetée (20) seulement sur moins de la moitié de la périphérie et est susceptible d'être soulevé de cette broche, tandis que l'écrou d'entraînement (24) est rapporté sur un bras d'une bascule (32) sur l'autre bras de laquelle agit un électro-aimant (36) susceptible d'être excité par le signal électrique du détecteur.

3. Fermoir selon la revendication 2, caractérisé en ce que l'électro-aimant (36) est, en outre, susceptible d'être excité par un signal électrique qui est engendré par l'organe de commutation (40) agissant sur le moto-réducteur électrique (18).

4. Fermoir selon la revendication 1, caractérisé en ce que le sens de rotation du moto-réducteur électrique (118) est susceptible d'être inversé et que cette inversion est susceptible d'être déclenchée respectivement aux extrémités de la course de déplacement de l'écrou d'entraînement (124) pour ramener impérativement à nouveau le fermoir, après un déclenchement automatique, dans sa position de départ préparée pour sa mise en œuvre.

5. Fermoir selon la revendication 4, caractérisé en ce qu'il est prévu un organe électronique de temporisation susceptible d'être ramené à son état initial, et qui engendre le temps de retard pour le déclenchement automatique.

6. Fermoir selon la revendication 4, caractérisé en ce que l'écrou d'entraînement (124) est disposé en étant bloqué en rotation et en étant susceptible de se déplacer axialement dans un guidage (126) relié à l'organe de déclenchement, et qu'il s'applique en exerçant un effort de traction sur un étrier transversal (128) du guidage (126).

7. Fermoir selon la revendication 6, caractérisé en ce que le guidage (26) est rapporté sur le bouton-poussoir (116) relié à l'organe de déclenchement.

8. Fermoir selon la revendication 4, caractérisé en ce qu'aux deux extrémités de la course de déplacement de l'écrou d'entraînement (124) sont disposés des organes de commutation (132), par exemple des commutateurs de proximité sans contact ou bien des micro-commutateurs, susceptibles d'être actionnés par cet écrou.

9. Fermoir selon la revendication 4, caractérisé en ce que les extrémités de la course de déplacement de l'écrou d'entraînement (124) sont susceptibles d'être déterminés électroniquement.

10. Fermoir selon la revendication 9, caractérisé en ce qu'un signal électronique, pour inverser le sens de rotation du moto-réducteur électrique (118), peut être dérivé de l'accroissement du prélèvement de courant du moto-réducteur électrique (118) aux extrémités de la course de déplacement de l'écrou d'entraînement (124).

11. Fermoir selon la revendication 9, caractérisé en ce que les extrémités de la course de déplacement de l'écrou d'entraînement (124) sont susceptibles d'être déterminées par comptage électronique des révolutions du moto-réducteur électrique (118), ou bien de la broche filetée (122), ou bien de la durée de marche du moto-réducteur électrique (118).

12. Fermoir selon la revendication 1, caractérisé en ce que l'alimentation en courant du moto-réducteur électrique (18, 118) et du détecteur est assurée par le réseau de bord du moyen de déplacement ou bien en cas de défaillance de ce réseau, par l'intermédiaire d'un accumulateur tampon ou d'un condensateur.

13. Fermoir selon la revendication 1, caractérisé en ce qu'il est prévu une jauge de mesure de l'extension réagissant à une sollicitation de traction du fermoir, et qui, lorsqu'une sollicitation de traction prédéfinie est dépassée, interrompt l'alimentation en courant du moto-réducteur électrique (18, 118).

14. Fermoir selon la revendication 2 et la revendication 13, caractérisé en ce que lorsqu'une sollicitation à la traction prédéfinie de la jauge de mesure de l'extension est dépassée, l'électro-aimant (36) est susceptible d'être excité en étant commandé par cette jauge.

# FIG.1

# FIG.2

FIG. 3

FIG. 4

2